# EUROPÄISCHE PATENTSCHRIFT

(11) **EP 3 563 144 B1**
(45) Veröffentlichungstag und Bekanntmachung des Hinweises auf die Patenterteilung: **16.09.2020**
(21) Anmeldenummer: 18702929.3
(22) Anmeldetag: 15.01.2018
(51) Int. Cl.: G01N 27/22

(54) **VERFAHREN ZUM BETREIBEN EINES KAPAZITIVEN REGENSENSORS EINES KRAFTFAHRZEUGS**
METHOD OF OPERATING A CAPACITIVE RAIN SENSOR OF A VEHICLE
METHODE D'UTILISATION D'UN CAPTEUR CAPACITIF DE PLUIE POUR UN VEHICULE AUTOMOBILE

(30) Priorität: 18.04.2017 DE 102017206480
(43) Veröffentlichungstag der Anmeldung: 06.11.2019
(73) Patentinhaber: Audi AG, 85045 Ingolstadt (DE)
(72) Erfinder: NACHTIGALL, Jens, 85049 Ingolstadt (DE)
(86) Internationale Anmeldenummer: PCT/EP2018/050900
(87) Internationale Veröffentlichungsnummer: WO 2018/192690

(56) Entgegenhaltungen:
- EP-A2- 0 438 634
- WO-A1-2007/140658
- DE-A1- 4 005 471
- KR-A- 20090 126 754
- US-A1- 2011 295 505
- MARCO ALLEGRETTI ET AL: "Cars as a Diffuse Network of Road-Environment Monitoring Nodes", WIRELESS SENSOR NETWORK, Bd. 06, Nr. 09, 1. Januar 2014 (2014-01-01), Seiten 184-191, XP055464858, ISSN: 1945-3078, DOI: 10.4236/wsn.2014.69018

## Beschreibung

Die Erfindung betrifft ein Verfahren zum Betreiben eines kapazitiven Regensensors in einem Kraftfahrzeug, der dazu ausgebildet ist in zumindest einer Messung ein analoges Messsignal korrespondierend zu einer Regenstärke zu erzeugen und als ein damit korreliertes Ausgabesignal auszugeben.

Es sind kapazitive Regensensoren bekannt, die durch eine geeignete Ausbildung zugleich zu einer Regenmessung sowie als eine Antenne für Funksignale verwendet werden können. Es sind auch Antennen bekannt, die auf ein durchsichtiges Laminat aufgebracht sind. Das Problem dabei ist, dass das Ergebnis der Regenmessung zumindest von Funksignalen beeinträchtigt wird.

In der EP 2 256 856 A1 ist eine transparente, flächenförmige Vorrichtung zum Empfangen und/oder zum Senden von elektromagnetischer Strahlung mit mindestens einer weiteren Funktion offenbart. Die zusätzliche Funktion liegt darin, eine physikalische Eigenschaft, etwa eine elektrische Kapazität, zu messen. Eine zusätzliche Funktion ist die Funktion eines Heizfelds und/oder eines feuchtigkeitsempfindlichen Sensorelements, insbesondere eines Regensensors. Um die beiden Funktionen zu trennen, werden die elektrischen Signale, die von der Funktion als Regensensor herrühren, von den Signalen, die von der Funktion des Empfangs- und/oder Sendeteils resultieren, durch ein Frequenzfilter getrennt.

In der DE 297 08 536 U1 ist eine Antennenvorrichtung für den Funkverkehr zu Kraftfahrzeugen offenbart. Die Antenne ist durch elektrisch leitfähige Leiterbahnen einer gedruckten Leiterplatte gebildet. Die gedruckte Schaltung ist vorzugsweise in einer separaten Abdeckung aus einem Kunststoffmaterial enthalten, das ein gut mit einer Glasfläche abschließendes Profil hat und mit einem geeigneten Klebstoff auf der Glasfläche befestigt werden kann. Weitere Funktionen sind durch die Antennenvorrichtung nicht realisiert.

In der WO 2013/091961 A1 ist eine Verbundscheibe mit Antennenstruktur und integrierter Schaltfläche offenbart. Dafür werden zwei elektrisch leitfähige Strukturen bereitgestellt, von denen die eine ein Antennenleiter ist und die andere eine Schaltfläche. Diese ist insbesondere eine berührungslose Schaltfläche. Eine weitere Funktion außer der Schaltfläche ist nicht offenbart. Durch die Integration eines Regensensors und einer Sende- und Empfangsvorrichtung für elektromagnetische Strahlung oder das Vorhandensein einer Antennenvorrichtung neben einem Regensensor, wird das Messergebnis des Regensensors durch gesendete oder empfangene elektromagnetische Strahlung der Sende- und Empfangsvorrichtung gestört.

Aus der WO 2007/140658 A1 ist ein flächiger kapazitiver Regensensor bekannt. Um Messungenauigkeiten durch Änderungen der Kapazität zu vermeiden, die in der Umgebung des Kondensators ihre Ursachen haben, nämlich Temperaturänderungen und elektromagnetische Interferenz, wird ein dualer planarer Kondensator vorgeschlagen, wobei ein erster planarer Kondensator als Messkondensator dient und der andere als Kompensationskondensator. Durch entsprechende Montage wird erreicht, dass der Messkondensator auf Regen auf der äußeren Oberfläche der Windschutzscheibe reagiert und weiterhin sensitiv ist gegenüber Temperaturveränderungen und elektromagnetische Interferenz. Der Kompensationskondensator hingegen ist so montiert, dass er nur gegenüber Temperaturänderungen und elektromagnetischer Interferenz sensitiv ist. Durch die Differenzbildung können damit die Umgebungseinflüsse kompensiert werden.

Die KR 2009 0126754 A beschreibt einen kapazitiven Regensensor, wobei zur Entfernung von Hochfrequenzstörungen eine Vielzahl von Kondensatoren verwendet wird.

Aus der DE 40 05 471 A1 ist ein kapazitiver Regensensor bekannt, bei dem zur Beseitigung des Einflusses von Störfeldern einer Hochspannungsleitung an die Schaltung ein dünnes, kurzes und isoliertes Kupferkabel angebracht wird, welches die Aufnahme von elektromagnetischen Störquellen ermöglicht wie eine bandförmige Elektrode, die Bestandteil eines kapazitiv arbeitenden Regensensors ist.

Die US 2011/295505 A1 befasst sich mit einem Regensensor, wobei zur Kompensation von Interferenzstörungen eine Brückenschaltung verwendet wird, bei der in einem Zweig der Messsensor und in einem anderen Zweig ein Referenzsensor angeordnet ist.

Aus der EP 0 438 634 A2 ist eine Auswerteschaltung für einen kapazitiven Sensor, beispielsweise einen Regensensor, bekannt, wobei der kapazitive Sensor und ein Kondensator einen kapazitiven Spannungsteiler bilden. Dessen Endanschlüsse werden gegenphasige Wechselspannungen gleicher Frequenz zugeführt. Der Verbindungspunkt zwischen dem Kondensator und dem kapazitiven Sensor ist zusammen mit dem Abgriff einer Spannungsquelle mit hohem Innenwiderstand mit dem Eingang eines Impedanzwandlers verbunden. Der Ausgang des Impedanzwandlers ist mit einem Synchrondemodulator verbunden, dem ferner mindestens eine Phase der Wechselspannung zuführbar ist.

Die erfindungsgemäße Aufgabe ist es, ein Verfahren bereitzustellen, das ein Betreiben eines kapazitiven Regensensors mit einer hohen Genauigkeit der Messergebnisse auch bei Störungen durch Störsignale ermöglicht. Dadurch sollen mit dem kapazitiven Regensensor Regenstärken genau gemessen werden können.

Die erfindungsgemäße Aufgabe wird gelöst gemäß dem unabhängigen Patentanspruch. Vorteilhafte Weiterbildungen sind durch die abhängigen Patentansprüche, die folgende Beschreibung und die Figuren der Anmeldung beschrieben.

Die Erfindung beschreibt ein Verfahren zum Betreiben eines kapazitiven Regensensors. Dieser weist zumindest eine elektrisch leitfähige Struktur auf. Der Regensensor wird insbesondere in einem Kraftfahrzeug eingesetzt, oder auch in einem Zug. In zumindest einer Messung gibt der Regensensor je ein analoges Messsignal aus, das zu einer Regenstärke korrespondiert. Damit ist gemeint, dass der Wert des Ausgabesignals, also des ausgegebenen analogen Messsignals in Abhängigkeit der Stärke des Regens unterschiedlich ist, zum Beispiel einen hohen Wert bei starkem Regen aufweist, einen niedrigen bei schwachem Regen und den Wert null bei keinem Regen.

Um das ausgegebene Messsignal, also das Ausgabesignal, robust gegen Einflüsse von Störsignalen zu machen stellt die Erfindung das folgende Verfahren bereit. In einem ersten Schritt a) wird dabei zumindest ein Störsignal erfasst, das eine Störung des analogen Messsignals bewirkt. Durch das Störsignal wird das Messsignal störerbehaftet, das bedeutet, dass der Wert des Messsignals ein verfälschter Wert ist, also nicht dem Wert entspricht, den der Regensensor ohne Vorliegen eines Störsignals ausgeben würde. Das Erfassen des Störsignals erfolgt mit einem dafür geeigneten Mittel. Der Vorteil an dem Verfahrensschritt ist, dass dadurch das Störsignal genau bekannt ist. Somit ist auch genau bekannt, in welcher Art das analoge Messsignal gestört ist. Auf diese Weise kann auch das Störsignal eine gleiche Frequenz oder eine sehr ähnliche, insbesondere um unter 10% abweichende Frequenz, aufweisen wie die Frequenz, bei der der kapazitive Regensensor betrieben wird.

Im erfindungsgemäßen Verfahrensschritt b) wird das störerbehaftete Messsignal zumindest teilweise entstört. Dies geschieht in einem Signalverarbeitungsschritt auf Grundlage des vorher erfassten Störsignals. Der Signalverarbeitungsschritt ist also dazu ausgebildet, die Störung des Messsignals, die durch das Störsignal hervorgerufen wird, zumindest teilweise zu kompensieren. Damit ist gemeint, dass durch das Bekanntsein des erfassten Störsignals darauf geschlossen werden kann, in welcher Art und Größe der Wert des analogen Messsignals verfälscht ist. Im Signalverarbeitungsschritt wird das erfasste Störsignal also dazu verwendet, die Auswirkung des Störsignals auf das analoge Messsignal zu kompensieren. Das Kompensieren oder Entstören geschieht dabei zumindest in einer Qualität, die gewährleistet, dass das entstörte Messsignal eine korrekte Regenstärkeinformation beinhaltet. Vorzugsweise wird das Störsignal also ganz kompensiert, das bedeutet das vorzugsweise das analoge Messsignal vollkommen entstört ist, also dem analogen Messsignal entspricht, das ohne das Störsignal gemessen worden wäre. Da es aber bekanntermaßen bei Messungen oder dem Erfassen von Signalen wie zum Beispiel dem Störsignal immer zu Messungenauigkeiten kommt, wird davon ausgegangen, dass in der Regel das analoge Messsignal teilweise entstört wird. Bevorzugt wird dabei ein möglichst großer Teil des Störsignals kompensiert, insbesondere werden zumindest 80 % des Störsignals kompensiert.

In Schritt c) des erfindungsgemäßen Verfahrens erfolgt eine Ausgabe eines zumindest teilweise entstörten Ausgabesignals. Das bedeutet, dass als Ausgabesignal das analoge Messsignal ausgegeben wird, nachdem es in einem Signalverarbeitungsschritt zumindest teilweise entstört wurde. Das Ausgabesignal ist also das zumindest teilweise entstörte Messsignal. Der Vorteil an diesem Verfahrensschritt ist, dass dadurch das analoge Messsignal des Regensensors bekannt ist, ohne dass es verfälscht ist, also ohne den Einfluss eines Störsignals. Dadurch ist gewährleistet, dass aus dem Ausgabesignal auf die tatsächliche Regenstärke sehr genau rückgeschlossen werden kann. Die Kenntnis über die tatsächliche, absolute Regenstärke ist für einige Anwendungen wichtig, beispielsweise zur Steuerung einer Scheibenwischanlage eines Kraftfahrzeugs oder als Information für Wetterdienste.

Erfindungsgemäß ist das gemessene Störsignal ein elektromagnetisches Funksignal, das ein Sendesignal ist. Das elektromagnetische Funksignal kann zum Beispiel von einem Mobiltelefon gesendet werden. Das erfasste Signal steht den weiteren Verfahrensschritten zur Verfügung. In diesem Fall ist der Signalverarbeitungsschritt durch einen Substrahierer ausgeführt. Der Substrahierer zieht das zuvor erfasste zumindest eine Störsignal vom störerbehafteten Messsignal ab. Das Ergebnis des Signalverarbeitungsschrittes ist ein Differenzsignal. Dieses Differenzsignal wird als das zumindest teilweise entstörte Ausgabesignal ausgegeben. Dies beschreibt mit anderen Worten, wie ein Störsignal, das als Störung auf das analoge Messsignal aufaddiert wird, im Signalverarbeitungsschritt wieder vom störerbehafteten analogen Messsignal abgezogen wird. Das Differenzsignal ist also das analoge Messsignal mit einem Wert, der zumindest näherungsweise dem Wert entspricht, der ohne Vorhandensein eines Störsignals ausgegeben worden wäre. Vorzugsweise entspricht der Wert des Differenzsignals genau dem Wert des analogen Messsignals, der ohne Vorhandensein eines Störsignals ausgegeben worden wäre. Der Vorteil daran ist, dass dadurch, dass das Störsignal erfasst wird und somit bekannt ist, das Störsignal auch sehr gut wieder kompensiert werden kann. Der Wert des zumindest teilweise entstörten Ausgabesignals entspricht also sehr genau dem Wert des analogen Messsignals, wie er ohne Vorhandensein eines Störsignals wäre. Der große Vorteil an der Subtraktion des Störsignals ist, dass dieses im selben Frequenzbereich einer Betriebsfrequenz des kapazitiven Regensensors sein kann und trotzdem die Störung kompensiert werden kann.

Erfindungsgemäß ist vorgesehen, dass die elektrisch leitfähige Struktur des kapazitiven Regensensors für zumindest zwei verschiedene Funktionen genutzt wird. Einerseits wird mittels der elektrisch leitfähigen Struktur eine Regenstärke gemessen, was der Funktion des Regensensors entspricht. Andererseits wird die elektrisch leitfähige Struktur in einer Funktion als Antenne dazu verwendet, das elektromagnetisches Funksignal zu senden. Die elektrisch leitfähige Struktur dient also auch als Antenne. Das ist insbesondere dadurch möglich, dass die elektrisch leitfähige Struktur in einer geeigneten geometrischen Form, die von der Frequenz des Funksignals abhängt, das gesendet werden soll, ausgestaltet ist. Zum Beispiel kann die durch die elektrisch leitfähige Struktur ausgestaltete Antenne dazu verwendet werden, Mobilfunksignale wie GSM- oder LTE-Signale zu senden. Der Vorteil daran ist, dass in diesem Fall ein Mobilfunksignal, das das Störsignal des Regensensors darstellt, dem Regensensor direkt bekannt ist. Das bedeutet das Erfassen des Störsignals aus Schritt a) kann direkt innerhalb des Regensensors ausgeführt werden. In vorteilhafter Weise ist in diesem Fall auch eine Signalverarbeitungsvorrichtung innerhalb des Regensensors bereitgestellt, die Verfahrensschritt b) ausführen kann, so dass der kapazitive Regensensor an einem Ausgang das zumindest teilweise entstörte Ausgabesignal ausgeben kann. Der Vorteil daran ist, dass eine integrierte Lösung bereitgestellt ist, die ohne weitere Bauteile wie etwa eine externe Antenne zum Erfassen eines Störsignals auskommt.

Eine Weiterbildung des Verfahrens berücksichtigt, dass das analoge Messsignal des Regensensors auch durch andere Einflüsse als elektromagnetische Funksignale gestört werden kann. Ein solcher Einfluss ist zum Beispiel eine Handbewegung, die in der Nähe des Regensensors dessen Kapazität ändert und damit auch den Wert eines Messsignals in einer Messung. In der Weiterbildung des Verfahrens werden daher in zwei dem Verfahren vorangehenden Schritten zunächst in Schritt i) mittels einer Kamera Referenzhandbewegungen und deren Auswirkung auf das analoge Messsignal erfasst und in Schritt ii) eine Korrekturvorschrift erstellt, mittels derer eine solche Störung einer jeweiligen Handbewegung kompensiert wird. In Schritt i) wird also zumindest eine Handbewegung erfasst, die eine Kapazität des kapazitiven Regensensors bei einer gleich bleibenden Regenstärke bewirkt. Das bedeutet, dass eine Kapazitätsänderung allein durch die Handbewegung geschieht und somit die Handbewegung ein Störsignal darstellt. Vorzugsweise werden in einer Vielzahl von Referenz Handbewegungen eine Vielzahl korrespondierender Änderungen der Kapazität erfasst. Dabei können wichtige Parameter sein: Größe der Hand und/oder Position der Hand und/oder Lage der Hand und/oder Abstand der Hand zum Regensensor. Mittels der erfassten Änderungen der Kapazität des Regensensors bei einer jeweiligen Referenz Handbewegung wird in Schritt ii) eine Korrekturvorschrift erstellt, die eine jeweilige Kapazitätsänderung kompensiert, sodass wieder das analoge Messsignal ausgegeben werden kann, wie es ohne das Vorhandensein einer störenden Handbewegung ausgegeben würde. Eine Korrekturvorschrift kann zum Beispiel eine einfache Tabelle sein, die einen vom störerbehafteten Messsignal abzuziehenden Wert bereitstellt und/oder den Wert des störerbehafteten Messsignals um einen bestimmten Faktor skaliert. Es kann sich bei der Korrekturvorschrift auch um eine formelhafte Rechenvorschrift handeln, die auf Grundlage der Einflüsse einer Vielzahl von Referenzhandbewegungen auf jeweilige Kapazitätsänderungen aufgestellt wurde. Der Vorteil an dieser Weiterbildung des Verfahrens ist, dass dadurch nicht nur elektromagnetische Störsignale kompensiert werden können, sondern auch ein durch eine Handbewegung gestörtes Messsignal des Regensensors mindestens teilweise entstört werden kann. Dazu wird mittels einer Kamera in Schritt a) zumindest eine Handbewegung erfasst, die die Messung des Regensensors stört. Die Kamera ist dabei so ausgestaltet, dass ein optischer Erfassungsbereich der Kamera zumindest den Bereich erfasst, in dem der kapazitive Regensensor positioniert ist. Die zumindest eine erfasste Handbewegung wird in Schritt b) anhand der oben genannten Parameter mit Referenzhandbewegungen verglichen und mittels eines Ähnlichkeitskriteriums wird eine Referenzhandbewegung ausgewählt. Das Ähnlichkeitskriterium beinhaltet wiederum zumindest einen der oben genannten Parameter, beispielsweise weicht also eine Größe eine Hand der erfassten Handbewegung um weniger als 20 % von einer Größe einer Hand einer erfassten Referenzhandbewegung ab oder eine Position einer Hand der erfassten Handbewegung weicht um weniger als 2 cm von einer Position einer Hand einer erfassten Referenzhandbewegung ab. Mittels der zur Referenzhandbewegung korrespondierenden Korrekturvorschrift wird das analoge Messsignal des kapazitiven Regensensors zumindest teilweise entstört und in Schritt c) als zumindest teilweise entstörtes Ausgabesignal ausgegeben.

Eine Weiterbildung des Verfahrens sieht vor, dass das zumindest eine Störsignal und/oder ein weiteres Störsignal nicht nur über die elektrisch leitfähige Struktur des kapazitiven Regensensors als erste Antenne gesendet wird, sondern zusätzlich über zumindest oder ausschließlich eine zweite weitere Antenne. Damit ist gemeint, dass entweder dasselbe Störsignal sowohl über die elektrisch leitfähige Struktur des Regensensors als auch über eine zusätzliche Antenne gesendet wird, oder, dass zumindest eines von zwei oder mehreren verschiedenen Störsignalen über die elektrisch leitfähige Struktur des kapazitiven Regensensor gesendet wird und ein anderes der Störsignale über eine vom kapazitiven Regensensor verschiedene Antenne gesendet wird.

Eine Weiterbildung des Verfahrens sieht vor, dass das zumindest teilweise entstörte Ausgabesignal über eine Antenne gesendet wird und von einer zentralen Empfangseinrichtung empfangen wird. Die zentrale Empfangseinrichtung interpretiert das Ausgabesignal als eine aktuelle Regenstärkeinformation und gibt diese entsprechend als eine Information aus. Beispielsweise kann die zentrale Empfangseinrichtung ein Wetterdienst sein. Der Vorteil daran ist, dass ein solcher Wetterdienst in Echtzeit über Regenstärkeinformationen an einer aktuellen Position eines Kraftfahrzeugs verfügt. Eine Antenne, über die das entstörte Ausgabesignal gesendet wird, kann die elektrisch leitfähige Struktur des kapazitiven Regensensors sein und/oder eine weitere Antenne des Kraftfahrzeugs sein. Im Fall, dass das Ausgabesignal direkt über die elektrisch leitfähige Struktur des Regensensors gesendet wird, ist der Vorteil, dass dabei auf eine weitere externe Antenne und einen Anschluss zu dieser Antenne verzichtet werden kann. Der Regensensor kann somit als integriertes Bauteil ausgeführt werden, das ganz ohne externe Anschlüsse auskommt. Der Vorteil, der entsteht, wenn eine Antenne des Kraftfahrzeugs zum Senden verwendet wird, ist, dass bereits vorhandene Sendevorrichtungen genutzt werden können. Das bedeutet zum Beispiel, dass auf eine zusätzliche Ausführung eines Transducers und/oder einer Sendesignalsteuerung verzichtet werden kann.

Im Folgenden sind Ausführungsbeispiele der Erfindung beschrieben. Hierzu zeigt:
- Fig. 1: eine schematische Darstellung des Verfahrens als Flussdiagramm;
- Fig. 2: eine schematische Darstellung der Messsignalentstörungsvorrichtung; und
- Fig. 3: eine schematische Darstellung eines Kraftfahrzeugs mit Messsignalentstörungsvorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

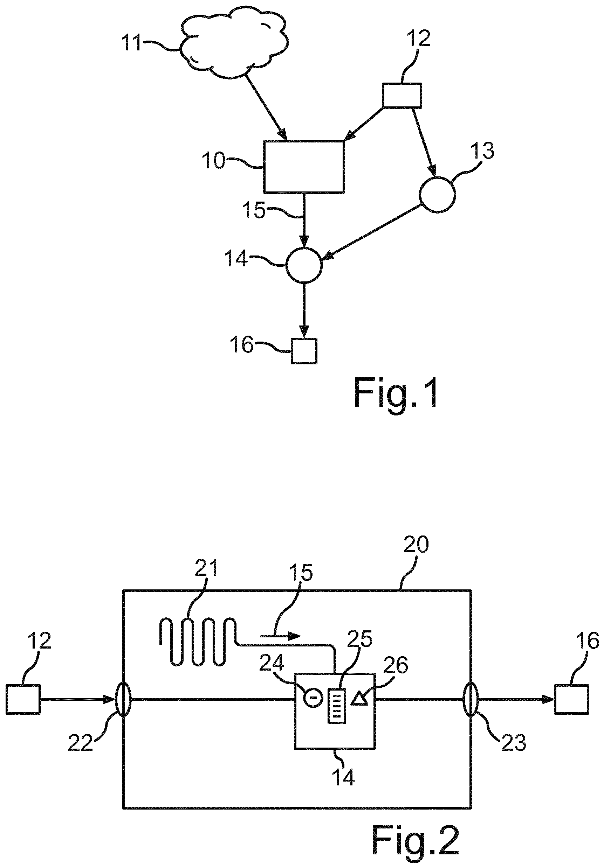

Fig. 1 zeigt in schematischer Darstellung das Verfahren. Dabei misst ein kapazitiver Regensensor 10 eine Regenstärke 11. Eine Information über die Regenstärke 11 gibt der kapazitive Regensensor 10 in einem analogen Messsignal 15 aus. Dieses analoge Messsignal ist gestört durch ein Störsignal 12. Das Störsignal 12 beeinflusst einerseits den kapazitiven Regensensor 10, andererseits wird es durch eine Erfassungsvorrichtung 13 erfasst. Das durch das Störsignal 12 störerbehaftete analoge Messsignal 15 und das von der Erfassungsvorrichtung 13 erfasste Störsignal 12 werden jeweils an eine Signalverarbeitungsvorrichtung 14 weitergegeben. Die Signalverarbeitungsvorrichtung 14 nutzt die Information des erfassten Störsignals 12, um das störerbehaftete analoge Messsignal 15 zu entstören. Als Ergebnis gibt die Signalverarbeitungsvorrichtung 14 ein zumindest teilweise entstörtes Ausgabesignal 16 aus.

Fig. 2 zeigt eine schematische Darstellung einer Messsignalentstörungsvorrichtung 20. Die Messsignalentstörungsvorrichtung 20 weist als kapazitiven Regensensor 10 eine elektrisch leitfähige Struktur 21 auf. Diese gibt das analoge Messsignal 15, das durch das Störsignal 12 gestört ist, an die Signalverarbeitungsvorrichtung 14 weiter. An einem elektrischen Eingang 22 wird das erfasste Störsignal 12 bereitgestellt, sodass es der Signalverarbeitungsvorrichtung 14 zur Verfügung steht. Die Messsignalentstörungsvorrichtung 20 gibt über einen elektrischen Ausgang 23 das zumindest teilweise entstörte Ausgabesignal 16 aus. Die Signalverarbeitungsvorrichtung 14 verfügt über einen Substrahierer 24, eine Korrekturvorschrift 25 und ein Ähnlichkeitskriterium 26.

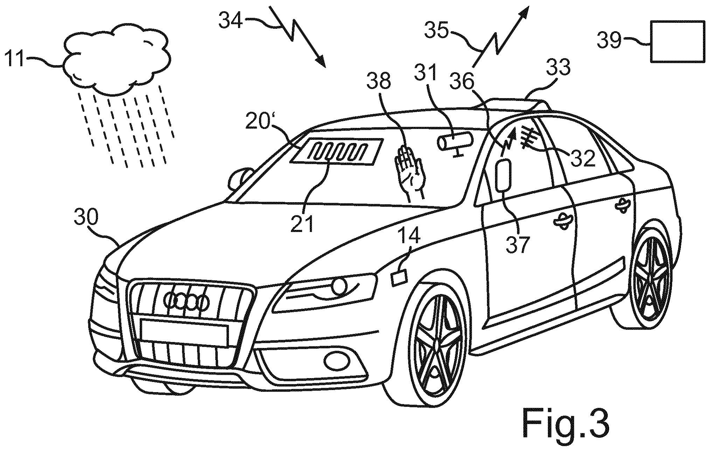

Fig. 3 zeigt in schematischer Darstellung ein Kraftfahrzeug 30, das mit einer Messsignalentstörungsvorrichtung 20' ausgestattet ist. Diese ist dazu geeignet eine Regenstärke 11 zu messen. Ein Störsignal ist ein Sendesignal 35 oder eine Handbewegung 38. Zur Ausführung des Signalverarbeitungsschrittes verfügt das Kraftfahrzeug 30 über eine Signalverarbeitungsvorrichtung 14. Über das Sendesignal 35 kann eine Information, etwa das Ausgabesignal 16, vom Kraftfahrzeug 30 an eine externe Servervorrichtung 39 gesendet werden.

In einem Ausführungsbeispiel ist das Störsignal 12 ist ein elektromagnetisches Funksignal. Dieses wird durch eine Erfassungsvorrichtung 13, etwa eine Antenne, über den elektrischen Eingang 22 der Messsignalentstörungsvorrichtung 20 an die Signalverarbeitungsvorrichtung 14 geleitet. Der kapazitive Regensensor gibt ein analoges Messsignal 15 aus, das durch das Störsignal 12 gestört ist. Das Messsignal 15 wird ebenfalls an die Signalverarbeitungsvorrichtung 14 geleitet. Der Substrahierer 24 zieht das erfasste Störsignal 12 vom störerbehafteten analogen Messsignal 15 ab. Das entstörte Messsignal 15 wird über den elektrischen Ausgang 23 als Ausgabesignal 16 ausgegeben. Das Ausgabesignal 16 ist im Ergebnis im Idealfall vollkommen entstört oder zumindest teilweise entstört, sodass das Ausgabesignal 16 eine Information der vom Regensensor 21 erfassten Regenstärke 11 in der gleichen Weise enthält, wie es im Ausgabesignal 16 enthalten wäre, wenn kein Störsignal 12 vorhanden wäre oder die Abweichung zu diesem Fall sehr klein ist, beispielsweise geringer als 10%.

In einem Beispiel ist das Störsignal 12 durch eine Handbewegung 38 gegeben. Die Handbewegung 38 kann zum Beispiel eine Handbewegung eines Fahrers des Kraftfahrzeugs 30 sein. Dabei wird die Handbewegung 38 an der Kamera 31 erfasst, wenn sie zumindest in einer vorbestimmten Nähe der Messsignalentstörungsvorrichtung 20' stattfindet und eine Messung des kapazitiven Regensensors 21 stört. In diesem Fall wird das Störsignal 12 von der Kamera 31 erfasst und an die Signalverarbeitungsvorrichtung 14 geleitet. Im Signalverarbeitungsschritt wird die erfasste Handbewegung 38 über ein Ähnlichkeitskriterium 26 mit anderen zuvor erfassten Handbewegungen verglichen und es wird mittels des Ähnlichkeitskriteriums 26 eine zuvor erfasste Handbewegung ausgewählt, deren Störeinfluss auf das analoge Messsignal 15 erfasst wurde und zu der eine Korrekturvorschrift 25 erstellt wurde, die die Störung des analogen Messsignals 15 korrigiert. Der Einfluss einer Handbewegung 38, die von der Kamera 31 erfasst wird, auf die Messung des kapazitiven Regensensors 21 ist also der Signalverarbeitungsvorrichtung 14 bekannt und kann durch die Korrekturvorschriften 25 kompensiert werden, sodass das Ausgabesignal 16 wiederum das analoge Messsignal 15 darstellt, wie es der kapazitive Regensensor 21 ohne Vorhandensein der Handbewegung 38 ausgeben würde.

In einem Ausführungsbeispiel entspricht die Messsignalentstörungsvorrichtung 20' des Kraftfahrzeugs 30 der Messsignalentstörungsvorrichtung 20 aus Fig. 2, d.h., die Signalverarbeitungsvorrichtung 14 und der kapazitive Regensensor 21 sind auch in der Messsignalentstörungsvorrichtung 20' bereitgestellt. In einem anderen Ausführungsbeispiel weist die Messsignalentstörungsvorrichtung 20' die elektrisch leitfähige Struktur 21 sowie den elektrischen Eingang 22 und den elektrischen Ausgang 23 auf. Die Signalverarbeitungsvorrichtung 14 jedoch ist außerhalb der Messsignalentstörungsvorrichtung 20' im Kraftfahrzeug 30 zur Verfügung gestellt. Dabei kann die Signalverarbeitungsvorrichtung 14 zum Beispiel durch einen Bordcomputer des Kraftfahrzeugs 30 ausgeführt sein.

Die Erfindung zeigt wie durch das erfindungsgemäße Verfahren kapazitive Regensensoren, bzw. deren Messsignalwerte, robust gegen Störsignale gemacht werden können. Der Vorteil eines kapazitiven Regensensors, der robust gegen Störsignale ist, ist vor allem, dass dieser eine genauere Information über eine aktuelle Regenstärke zur Verfügung stellt als beispielsweise optische Regensensoren. Das ist notwendig, um die Regenstärkeinformation des kapazitiven Regensensors zum Beispiel für einen Wetterdienst zu verwenden. Der kapazitive Regensensor mit dem erfindungsgemäßen Verfahren kann also sehr genaue Regenstärkeinformationen in Echtzeit an einen externen Dienst, wie einen Wetterdienst senden. Störsignale, die das Messergebnis des kapazitiven Regensensors beeinträchtigen und verfälschen, also zum Beispiel elektromagnetische Funksignale wie UMTS-, GSM- oder LTE-Signale, werden durch das erfindungsgemäße Verfahren kompensiert. Somit wird das volle Potenzial eines kapazitiven Regensensors bereitgestellt, das eine sehr genaue Regenstärkemessung ermöglicht. Dabei ist der kapazitive Regensensor selbst als Antenne ausgeführt, die das Störsignal sendet, so dass es direkt über den Regensensor erfasst wird und bekannt ist und somit aus der Messung ausgefiltert werden kann, anstatt dass es als undefiniertes Rauschen oder Störung in die Regenmessung mit einfließt. Die Vorteile dabei sind Senkung der Bauteilkosten durch Reduktion von Komplexität und Variantenvielfalt. Ein so betriebener kapazitiver Regensensor ermöglicht erst eine derartige Regenmessung, so wie sie für bestimmte Anwendungsfälle etwa einen Schwarmdienst zum Senden von Wetterdaten an ein Backend benötigt wird. Der Vorteil eines kapazitiven Regensensors ist, dass damit auch auf Restsalzmengen im Wasser geschlossen werden kann, die beispielsweise im Winter beschreiben, wie viel Salz sich auf einer Straße befindet, sodass man weiß, ob zur Sicherheit des Verkehrs bei Frost Salz auf die Straße gestreut werden muss oder nicht.

Insgesamt zeigen die Beispiele, wie durch die Erfindung ein kapazitiver Regensensor betrieben werden kann, sodass dieser auch bei Vorhandensein von Störsignalen eine so präzise und genaue Regenstärke-Information ausgibt, dass sie für Dienste wie Wetterdienste genutzt werden kann. Dafür wird das Messsignal des kapazitiven Regensensors in Abhängigkeit des erfassten Störsignals bearbeitet, sodass die Auswirkung des Störsignals kompensiert wird.

## Patentansprüche

1. Verfahren zum Betreiben eines kapazitiven, eine elektrisch leitfähige Struktur (21) aufweisenden Regensensors (10) eines Kraftfahrzeugs (30), der dazu ausgebildet ist, in zumindest einer Messung ein analoges Messsignal (15) korrespondierend zu einer Regenstärke (11) zu erzeugen und als ein damit korreliertes Ausgabesignal (16) auszugeben, wobei das Verfahren folgende Schritte umfasst:
a) Erfassen (13) zumindest eines Störsignals (12), welches eine Störung des analogen Messsignals (15) bewirkt und zu einem störerbehafteten Messsignal (15) führt;
b) Zumindest teilweises Entstören (14) des störerbehafteten Messsignals (15) in zumindest einem Signalverarbeitungsschritt (14) auf Grundlage des erfassten Störsignals (12) und
c) Ausgabe eines zumindest teilweise entstörten Ausgabesignals (16), wobei das zumindest eine Störsignal (12) in Schritt a) ein elektromagnetisches Funksignal ist, das ein Sendesignal (35) ist;
im Signalverarbeitungsschritt in Schritt b) das zumindest eine Störsignal (12) vom störerbehafteten Messsignal (15) subtrahiert wird; und das entstehende Differenzsignal als das zumindest teilweise entstörte Ausgabesignal (16) in Schritt c) ausgegeben wird,
wobei mittels der elektrisch leitfähigen Struktur (21) des kapazitiven Regensensors (10)
- einerseits in einer Funktion als Regensensor eine Regenstärke (11) gemessen wird und
- andererseits in einer Funktion als Antenne das elektromagnetische Funksignal gesendet wird, das als Störsignal (12) die Messung stört.

2. Verfahren nach Anspruch 1, **dadurch gekennzeichnet, dass** es folgende dem Verfahren vorangehende Schritte umfasst:
i) Erfassen zumindest einer Referenzhandbewegung mittels zumindest einer Kamera (31) und einer zur Referenzhandbewegung korrespondierenden Änderung einer Kapazität des kapazitiven Regensensors (21) bei einer gleichbleibenden Regenstärke (11);
ii) Erstellen einer Korrekturvorschrift (25) zu einer Referenzhandbewegung, die eine jeweilige Kapazitätsänderung einer korrespondierenden Handbewegung (38) kompensiert; wobei
die Störung des analogen Messsignals durch eine Handbewegung (38) erzeugt wird, welche in Schritt a) mittels zumindest einer Kamera (31) erfasst wird; die erfasste Handbewegung (38) mittels eines Ähnlichkeitskriteriums (26), insbesondere einer Handposition und/oder einer Handgröße, einer Referenzhandbewegung zugeordnet wird und das störerbehaftete Messsignal (15) mittels der zu dieser Referenzhandbewegung erstellten Korrekturvorschrift (25) im Signalverarbeitungsschritt (14) in Schritt b) korrigiert wird; und das korrigierte Messsignal (15) als das zumindest teilweise entstörte Ausgabesignal (16) in Schritt c) ausgegeben wird.

3. Verfahren nach einem der vorhergehenden Ansprüche, **dadurch gekennzeichnet, dass** das zumindest teilweise entstörte Ausgabesignal (16) über die durch die elektrisch leitfähige Struktur (21) des kapazitiven Regensensors (10) ausgebildete erste Antenne und/oder eine zweite und/oder weitere Antenne (33) des Kraftfahrzeugs (30) gesendet wird und von einer zentralen Empfangseinrichtung (39) empfangen wird, die das zumindest teilweise entstörte Ausgabesignal (16) als eine aktuelle Regenstärkeinformation ausgibt.

## Claims

1. Method for operating a capacitive a rain sensor (10) of a motor vehicle (30) having an electroconductive structure (21), which is designed, in at least one measurement, to generate an analogue measurement signal (15) corresponding to a rain heaviness (11) and output it as a correlated output signal (16), wherein the method comprises the following steps:
a) detecting (13) at least one interference signal (12), which causes interference to the analogue measurement signal (15) and results in an interference-affected measurement signal (15);
b) at least partly suppressing the interference (14) of the interference-affected measurement signal (15) in at least one signal processing step (14) on the basis of the detected interference signal (12) and
c) outputting an at least partly interference-suppressed output signal (16),
wherein the at least one interference signal (12) in step a) is an electromagnetic radio signal, which is a transmitting signal (35);
in the signal processing step in step b) the at least one interference signal (12) is subtracted from the interference-affected measurement signal (15);
and the resulting difference signal is output as the at least partly interference-suppressed output signal (16) in step c),
wherein by means of the electroconductive structure (21) of the capacitive rain sensor (10):
- on the one hand in a function as rain sensor a rain heaviness (11) is measured and
- on the other hand in a function as antenna the electromagnetic radio signal is transmitted, which as interference signal (12) disrupts the measurement.

2. Method according to claim 1, **characterised in that** it comprises the following steps preceding the method:
i) detecting at least one reference hand movement by means of at least one camera (31) and a change of capacity of the capacitive rain sensor (21) corresponding to the reference hand movement during uniform rain heaviness (11);
ii) preparing a correction script (25) for a reference hand movement, which compensates for a respective change in capacity of a corresponding hand movement (38); wherein
the disruption of the analogue measurement signal by a hand movement (38) is generated which is detected in step a) by means of at least one camera (31); the detected hand movement (38) is assigned to a reference hand movement by means of a similarity criterion (26), in particular a hand position and/or a hand size, and the measurement signal (15) affected by interference is corrected by means of the correction script (25) prepared for this reference hand movement in the signal processing step (14) in step b); and the corrected measurement signal (15) is output as the at least partly interference-suppressed output signal (16) in step c).

3. Method according to any of the preceding claims, **characterised in that** the at least partly interference-suppressed output signal (16) is transmitted by the first antenna formed by the electroconductive structure (21) of the capacitive rain sensor (10) and/or a second and/or additional antenna (33) of the motor vehicle (30) and is received by a central receiving device (39), which outputs the at least partly interference-suppressed output signal (16) as current rain heaviness information.

## Revendications

1. Procédé pour faire fonctionner un détecteur de pluie (10) capacitif présentant une structure électriquement conductrice (21) d'un véhicule automobile (30) qui est conçu pour générer dans au moins une mesure un signal de mesure (15) analogique correspondant à une intensité de pluie (11) et à le délivrer sous la forme d'un signal de sortie (16) ainsi corrélé, dans lequel le procédé comprend les étapes suivantes :
a) détection (13) d'au moins un signal parasite (12) qui provoque une perturbation du signal de mesure (15) analogique et entraîne un signal de mesure (15) parasité ;
b) déparasitage au moins partiel (14) du signal de mesure (15) parasité dans au moins une étape de traitement de signal (14) sur la base du signal parasite détecté (12) et
c) délivrance d'un signal de sortie (16) au moins partiellement déparasité, dans lequel l'au moins un signal parasite (12) de l'étape a) est un signal radio électromagnétique qui est un signal d'émission (35) ; à l'étape de traitement de signal de l'étape b) l'au moins un signal parasite (12) est soustrait du signal de mesure (15) parasité ;
et le signal de différence obtenu est délivré sous la forme du signal de sortie au moins partiellement déparasité (16) de l'étape c),
dans lequel au moyen de la structure électriquement conductrice (21) du détecteur de pluie (10) capacitif
- d'une part dans une fonction de détecteur de pluie, une intensité de pluie (11) est mesurée et
- d'autre part dans une fonction d'antenne, le signal radio électromagnétique qui parasite la mesure sous la forme d'un signal parasite (12) est émis.

2. Procédé selon la revendication 1, **caractérisé en ce qu'**il comprend des étapes suivantes précédant le procédé :
i) détection d'au moins un mouvement de main de référence au moyen d'au moins une caméra (31) et d'une modification d'une capacité du détecteur de pluie capacitif (21) correspondant au mouvement de main de référence dans le cas où une intensité de pluie (11) est constante ;
ii) production d'une consigne correction (25) à un mouvement de main de référence qui compense une modification de capacité respective d'un mouvement de main correspondant (38) ; dans lequel
la perturbation du signal de mesure analogique est générée par un mouvement de main (38) qui est détecté à l'étape a) au moyen d'au moins une caméra (31) ; le mouvement de main détecté (38) est attribué au moyen d'un critère de similitude (26), en particulier d'une position de la main et/ou d'une taille de la main, à un mouvement de main de référence et le signal de mesure (15) parasité est corrigé au moyen de la consigne de correction (25) produite à ce mouvement de main de référence à l'étape de traitement de signal (14) à l'étape b) ; et le signal de mesure (15) corrigé est délivré sous la forme du signal de sortie (16) au moins partiellement déparasité de l'étape c).

3. Procédé selon l'une quelconque des revendications précédentes, **caractérisé en ce que** le signal de sortie (16) au moins partiellement déparasité est émis par le biais de la première antenne conçue par la structure électriquement conductrice (21) du détecteur de pluie capacitif (10) et/ou une deuxième et/ou une autre antenne (33) du véhicule automobile (30) et est reçu par un dispositif de réception central (39) qui délivre le signal de sortie (16) au moins partiellement déparasité sous la forme d'une information sur l'intensité de pluie actuelle.
